# EUROPEAN PATENT APPLICATION

(11) **EP 1 365 343 A1**
(43) Date of publication of application: **26.11.2003**
(21) Application number: 03253265.7
(22) Date of filing: 23.05.2003
(51) Int. Cl.: G06F 17/60

(54) **Method and apparatus for managing a maintenance operation**

(30) Priority: 24.05.2002 US 63922
(71) Applicant: UNITED TECHNOLOGIES CORPORATION, Hartford, CT 06101 (US)
(72) Inventor: Budnik, Daniel J., Southington, CT 06489 (US); Coulombe, Ghislain, Colebrook, New Hampshire 03576 (US)
(74) Representative: Power, Philippa Louise

(57) **Abstract**

A computerized method of defining or of modifying a work scope. One method includes: providing a list of tasks; selecting a desired task from the list; adding the desired task to the work scope; determining whether a related task exists, and adding the related task to the work scope if the related task exists. Another method includes: providing a work scope, the work scope comprising a plurality of tasks; choosing a selected task from the of tasks; locating an alternate task that is suitable as a substitute for the selected task; determining whether a conflict exists between the alternate task and a remainder of the tasks; and substituting the selected task in the work scope with the alternate task if no conflict exists. A computerized method of displaying a graphical representation of a relationship between data elements within a database, comprising the steps of: providing a database of data groups, each of the data groups containing at least one data element; selecting a desired one of the data elements; searching the database for instances of the desired data element; determining a relationship between the data groups which contain the desired data clement; and displaying said relationship.

## Description

This invention relates to a method and an apparatus for managing an operation. More particularly, this invention relates to a computer-related method and apparatus for managing a maintenance operation to be performed on a gas turbine engine.

The following terms and phrases will be used throughout the specification.

"Bill of Material" (BOM) refers to a list of components that define a product, such as a gas turbine engine.

"Master Parts List" or "Grand BOM" refers to a list of all potential parts that could be used in the product.

"As-Built BOM" refers to a list of parts used by the Original Equipment Manufacturer (OEM) or the maintenance facility to assemble the product.

"As-Shipped BOM" refers to a list of parts in the product when the OEM or the maintenance facility releases the product. Since the product may undergo testing after assembly, the As-Shipped BOM may not be the same as the As-Built BOM. If testing proves successful, the OEM or the maintenance facility releases the product engine and the As-Shipped BOM will mirror the As-Built BOM. If testing proves unsuccessful, the OEM or the maintenance facility may replace parts on the product and perform additional testing. If the OEM or the maintenance facility replaces parts, the As-Shipped BOM will not be the same as the As-Built BOM.

"As-Received Configuration" refers to a list of parts found in the product by the maintenance facility during disassembly. If the maintenance facility performed the previous maintenance operation, then the As-Received Configuration will be the same as the As-Shipped BOM.

"Planned Configuration" refers to a preliminary list of parts selected by the maintenance facility for reassembly into the product.

"Should Build Configuration" refers to a list of parts selected by the maintenance for reassembly into the product.

"Engine Manual" refers to a publication that contains OEM and aviation authority (e.g. Federal Aviation Administration, Joint Aviation Authority, *etc.)* approved engine maintenance procedures.

"Illustrated Parts Catalog" refers to a publication that provides part numbers and illustrations for parts used to manufacture an engine and for replacement parts.

"Service Bulletin" refers to a publication containing OEM and aviation authority approved technical data for incorporating an engineering change into an existing engine. The Service Bulletin includes work instructions necessary to incorporate the engineering change into the engine.

"Add Parts List" refers to the parts that the Seivice Bulletin can add to the engine.

"Cancel Parts List" refers to the parts that the Service Bulletin can remove from the engine.

"Sets Requirement" refers to a stipulation in the Service Bulletin that all of the parts on the Add Parts List must be added to the engine and that all of the parts on the Cancel Parts List must be removed from the engine. In other words, a Sets Requirement prohibits partial incorporation of the Service Bulletin.

A "Prerequisite" Service Bulletin refers to a Service Bulletin already incorporated into an engine before a maintenance facility performs the subject Service Bulletin. Typically, the subject Service Bulletin reworks some of the changes made by the Prerequisite Service Bulletin.

A "Concurrent" Service Bulletin refers to a Service Bulletin that a maintenance facility must accomplish at least simultaneously with the subject Service Bulletin.

A "Superceding" Service Bulletin refers to a Service Bulletin that replaces the subject Service Bulletin.

A "Recommended" Service Bulletin refers to a Service Bulletin that a maintenance facility should accomplish along with the subject Service Bulletin in order to gain maximum benefit of the Service Bulletins.

A maintenance facility can perform a variety of operations on an engine. While performing these maintenance operations, the maintenance facility must ensure that the engine retains a valid configuration. In other words, the maintenance facility must verify that each part used in the engine is compatible with the other parts used in the engine. This process is known as configuration management.

While simple in theory, real life configuration management creates a daunting task for the maintenance facility. Configuration management becomes increasingly convoluted with the successive complexity of the maintenance operation. Maintenance operations include, in increasing order of complexity, maintenance, repair and overhaul.

Conventional configuration management is so complex during an overhaul that maintenance facilities perform the process manually. In fact, maintenance facilities often use several individuals to perform this task. The individuals performing configuration management typically consult several discrete sources of information. These sources include Engine Manuals, Illustrated Parts Catalogs and Service Bulletins. These sources of information are either hard copies or electronic versions of the hard copy. By manually cross-referencing these discrete sources, the individuals ensure that each part selected for reinstallation in the engine is proper and is compatible with the remaining parts.

However, such manual configuration management consumes a significant amount of time. In light of the increased time constraints placed on the maintenance facility during an overhaul, a desire exists for a replacement process that is quicker than conventional manual configuration management.

Conventional manual configuration management also requires multiple audits to ensure accuracy. Clearly, a desire exists for a replacement process that does not require such multiple audits.

Furthermore, conventional manual configuration management is incapable of repeatability. A maintenance facility performing the same maintenance operation on two identical engines would need to perform the same time consuming configuration management research twice. The individuals performing the research on the first engine cannot transfer this knowledge under the current manual process to the research for the second engine. Clearly, a desire exists for a replacement process that is repeatable.

Finally, conventional manual configuration management may not produce consistent results. For example, different individuals may interpret information contained within a Service Bulletin differently. These different interpretations may result in the issuance of different work instructions for an identical procedure. Clearly, a desire exists for a replacement process that provides consistent results.

It is an object of the present invention at least in its preferred embodiments to provide a new and improved method and apparatus for managing an operation.

It is a further object of the present invention at least in its preferred embodiments to provide a method and apparatus for maintaining a product.

It is a further object of the present invention at least in its preferred embodiments to provide a maintenance method and apparatus having a reduced number of manual steps.

It is a further object of the present invention at least in its preferred embodiments to provide a computerized method and apparatus for assisting a maintenance operation performed on a gas turbine engine.

It is a further object of the present invention at least in its preferred embodiments to provide a maintenance method and apparatus that reduces the time duration of a maintenance operation.

It is a further object of the present invention at least in its preferred embodiments to provide a maintenance method and apparatus that eliminates multiple audits.

It is a further object of the present invention at least in its preferred embodiments to provide a maintenance method and apparatus that is repeatable for different products.

From a first aspect the present invention provides a computerized method of defining a work scope, comprising the steps of: providing a list of tasks; selecting a desired task from the list; adding the desired task to the work scope; determining whether a related task exists; and adding the related task to the work scope if the related task exists.

From a further aspect the present invention provides a computerized method of modifying a work scope, comprising the steps of: providing a work scope of a plurality of tasks; choosing a selected task from the tasks; locating an alternate task that is suitable as a substitute for the selected task; determining whether a conflict exists between the alternate task and a remainder of the tasks; and substituting the selected task in the work scope with the alternate task if no conflict exists.

From a still further aspect the present invention provides a computerized method of displaying a graphical representation of a relationship between data elements within a database, comprising the steps of: providing a database of data groups, each data group containing at least one data element; selecting a desired one of the data elements; searching the database for instances of the desired data element; determining a relationship between the data groups which contain the desired data element; and displaying the relationship.

Other uses and advantages of the present invention will become apparent to those skilled in the art upon reference to the specification and the drawings. Preferred embodiments of the invention will now be described by way of example only, and wth reference to the accompanying drawings in which:
Figure 1 is a flowchart of the steps involved in a typical engine overhaul;
Figure 2 is a schematic of a computer system used by the present invention;
Figure 3 is a screen shot of the computer system in Figure 2 during various stages in the performance of a first task;
Figures 4a and 4b are screen shots of the computer system in Figure 2 at various stages in the performance of a second task;

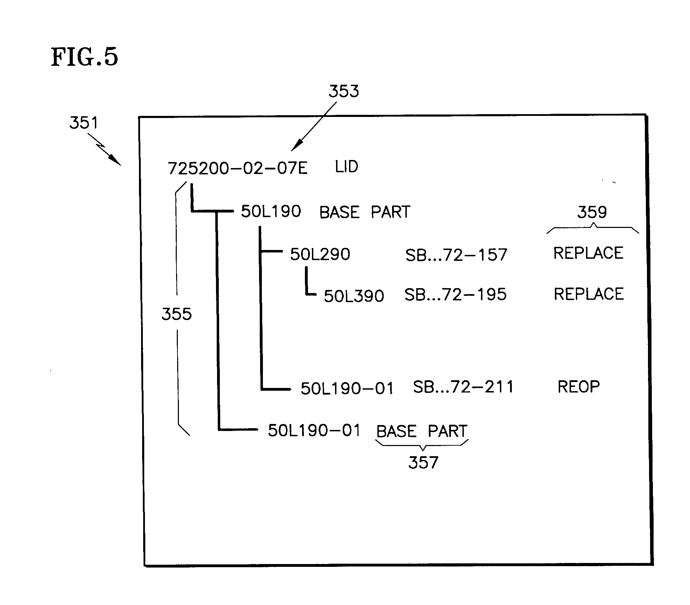

Figure 5 is a screen shot of the computer system during performance of a second task; and
Figure 6 is another screen shot of the computer system during performance of a second task.

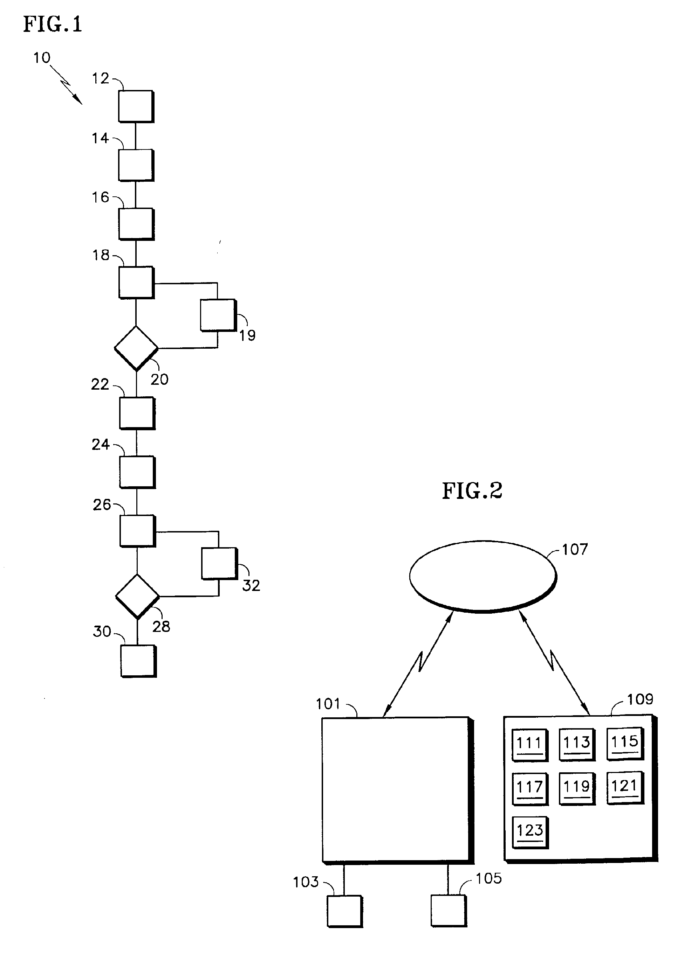

While the present invention could be used to manage any type of operation on any type of product, the following description refers specifically to the management of the overhaul process of a gas turbine engine. Figure 1 shows a flowchart of the main steps involved in a typical engine overhaul process 10.

As a first step 12 of the overhaul process 10, the maintenance facility prepares the work scope. The work scope identifies the operations that the maintenance facility will perform on the engine. As will be described in more detail below, the maintenance facility may utilize the present invention to help develop the work scope in the first step 12.

At a second step 14, the maintenance facility receives the engine. In a third step 16, the maintenance facility disassembles the engine according to the work instructions needed to perform the work scope. At a fourth step 18, the maintenance facility inspects the disassembled parts. The inspection determines, for example, whether each part: (1) can be returned to service *(i.e.* a serviceable part); (2) requires rework; or (3) must be removed from service.

A fifth step 20 determines whether the maintenance facility must revise the work scope based upon the parts removed from the engine. For example, the maintenance facility may discover that the As-Received Configuration includes a part not found on the As-Shipped Configuration. The maintenance facility may also discover a condition (damage, excessive wear, *etc.)* during disassembly that requires further disassembly of the engine. As a result, the maintenance facility must revise the work scope to disposition the unexpected part or to include the additional disassembly steps. If a work scope revision is necessary, then the process revises the work scope at step 19 and returns to the fourth step 18 to complete any additional operations required from the revised work scope.

As will be described in more detail below, the maintenance facility may utilize the present invention to help revise the work scope in step 19. If no work scope revision is necessary, then the process continues to the next step.

A sixth step 22 sources the parts needed for reassembly of the engine. As discussed above, the inspection in the fourth step 18 groups parts into three categories- serviceable, requiring rework or remove from service. The maintenance facility preferably routes parts identified as serviceable directly to the assembly area. The maintenance facility preferably routes parts identified as requiring rework to a repair source (either an internal location or external vendor). After rework, the parts travel to the assembly area. Finally, the maintenance facility preferably routes parts identified as remove from service to a materials review section to determine whether the maintenance facility must scrap the part.

Problems may arise while sourcing a part. For example, the maintenance facility may discover that a part is unavailable, has a long lead-time or turnaround, or is too costly (when compared to similar parts). To avoid delaying the overhaul and/or to reduce costs, the maintenance facility may seek to use a suitable alternate part. The alternate part, however, must not alter an otherwise valid engine configuration. In other words, the alternate part must be compatible with all of the other parts used in the engine. As will be described in more detail below, the maintenance facility may utilize the present invention to find alternate parts in the sixth step 22.

A seventh step 24 reassembles the engine with the sourced parts obtained during the fifth step 20. An eighth step 26 tests the engine to ensure satisfactory operation. A ninth step 28 determines the success of the testing performed in the eighth step 26. If successful, the process continues to a tenth step 30 which releases the overhauled engine to the engine owner. If unsuccessful, the process goes to an eleventh step 32 which performs any rework necessary to ensure the engine passes subsequent testing. Upon completing the eleventh step 32, the process returns to the eighth step 26 to retest the engine.

The present invention provides a tool to accomplish configuration management during a maintenance operation. Differently than conventional methods, the tool uses a computer system to assist actively with the configuration management process. Figure 2 presents a schematic representation of such a computer system. Generally speaking, the computer system could include a general purpose computer 101 with a suitable processor (not shown), memory (not shown), one or more mass storage devices (not shown), one or more input devices 103 (e. g. mouse, keyboard or bar code scanner) and one or more output devices 105 (e.g. monitor or printer).

The computer 101 could be connected to a network 107 with conventional connection technology (e.g. LAN, WAN, dial-up or wireless). Using the network 107, the computer 101 could access one or more remote resources, such as one or more servers 109.

The computer 101 should be capable of running a program locally. The program may be written in any suitable language, such as dynamic HTML or JAVA script. Preferably, the program provides one of the output devices 105 witha graphical user interface to help the individual readily perform configuration management. The program has several modules to assist the individual during various stages of the maintenance operation. These modules can perform various functions through access to one or more databases. Each module will be described in more detail below.

The server 109 could include the same components as computer 101. However, the server 109 should have the capability to process and to store larger amounts of data than the computer 101.

The maintenance facility may utilize a planning module 200 of the tool during the first step 12 of the overhaul process 10. Specifically, the maintenance facility may use the planning module 200 to help generate a list of the modifications to the engine that will occur during overhaul. Typically, the maintenance facility assembles such list before the engine arrives for the overhaul. The work scope of an overhaul includes the incorporation of selected Service Bulletins ("SBs"). The selected SBs include mandatory SBs and any optional SBs requested by the engine owner. The maintenance facility and the engine owner jointly assemble the modification scope.

When the maintenance facility seeks to perform an SB on the engine, the maintenance facility must remain cognizant of any related SBs. Examples of related SBs include prerequisite SBs, concurrent SBs, superceding SBs and recommended SBs. As appropriate, the maintenance facility may need to add the completion of one or more of the related SBs to the modification scope.

The server 109 includes an SB database 111. The SB database 111 preferably includes electronic versions of the hard copy SBs (e.g. in HTML format) for viewing upon request by the user and a version of the SBs in a codification understood by the program when accessed during the queries discussed below. The program could include another module (not shown) to allow the maintenance facility to input new SBs into the SB database 111 for access by the user and by the program

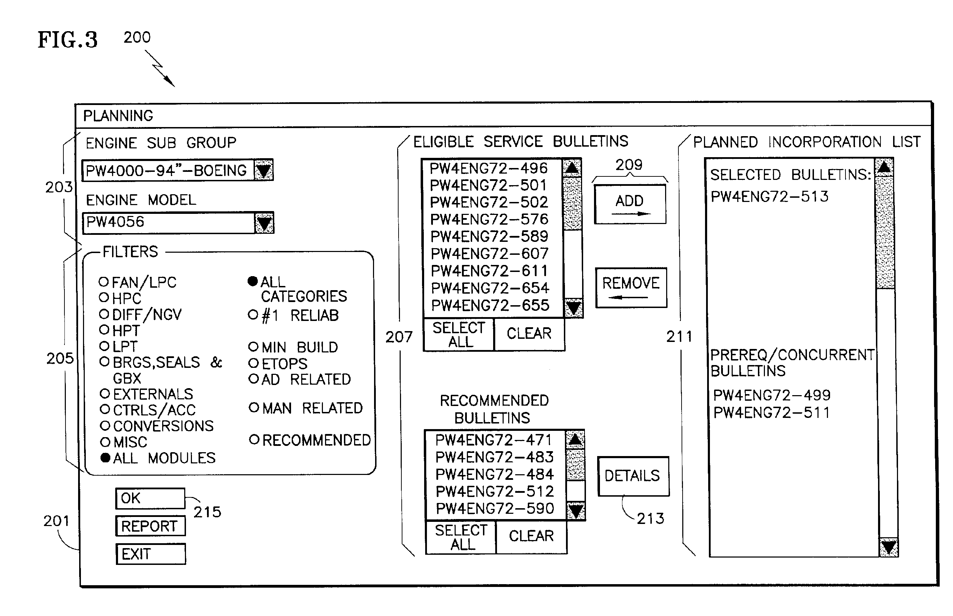

Figure 3 displays a screen 201 generated by the planning module 200 of the program to assist the maintenance facility create the work scope. The screen 201 could include an input section 203, a filter section 205, a results section 207, a decision section 209 and an output section 211. Any other suitable arrangement could be used. The various sections of the screen 201 will be described in more detail below.

The user can manipulate the input device 103 to populate the input section 203 of the screen 201 with information specific to the engine. The input section 203 can accept any information sufficient to assist the user in generating the work scope for the overhaul of the engine. In the figure, the input section 203 allows the user to enter characteristics of the engine, such as the model number, fan diameter, and the name of the aircraft manufacturer. Other appropriate attributes could be used. These attributes help with the data sorting described below.

The program will then search the SB database 111 for instances of the attributes provided in the input section 203 using conventional techniques. Since the number of relevant SBs may be numerous, the program allows the user to filter the results. The user can choose which results to view by making selections in a filter section 205. The filter section 205 allows, for example, the user to limit the search results by the engine module affected by the SB (the right side of the filter section 205) and/or by SB category (the left side of the filter section 205). The program preferably has a default filter setting suited to the needs of the particular engine owner. The program could use other filtering methods.

The program displays the results of the search (after the aforementioned filtering) in the results section 207. In other words, the program only displays the relevant SBs. The program can arrange the results section 207 in any helpful manner. The results section 207 has two display categories - eligible SBs and recommended SBs. The results section 207 places all SBs that satisfy the attributes provided in the input section 203 in the eligible SB category. From these eligible SBs, the results section 207 also places the recommended SBs in the recommended category. In other words, the recommended category is a subset of the SBs appearing in the eligible category. The program can sort the results in this manner using conventional techniques.

The user manipulates the input device 103 to indicate which SBs the engine owner desires to include in the modification scope. After making a choice with the input device 103 (e.g. by left-clicking the mouse), the user can include the selected SB in the modification scope by clicking the Add button appearing in the decision section 209. Before placing the SB in the output section 211 and in the temporary register of modification scope in the memory of the computer 101, the program performs several checks.

First, the program will search the SB database 111 on the server 109 to determine if a superceding SB exists. If a superceding SB does exist, the program queries the user to choose which SB to add to the output section 21 1 - the superceding SB or the superceded SB. The program will then add the chosen SB to the output section 211 as seen in Figure 3d and to a temporary register of modification scope within the memory of the computer 101.

Second, the program will search the SB database 111 to determine if any other related SBs exist. Such related SBs include pre-requisite, concurrent or recommended SBs. If related SBs do exist, the program may: (i) automatically add the related SBs to the modification scope; (ii) query the user whether to add the related SBs to the modification scope; or (iii) any combination of (i) and (ii) above. The program could allow the user to preselect which types of related SBs the program will automatically add to the modification scope and which related SBs the user should select for inclusion in the modification scope. The program could accomplish this by allowing the user to adjust settings (not shown) on a pop-up control panel (not shown).

Should the user desire any additional information regarding a specific SB during this process, the user can select the SB with the input device 103 and select the Detail button 213. The program preferably launches the electronic version of the SB from the SB database 111 for viewing by the user. This option could alternately be available on a pop-up menu accessed by right-clicking the mouse. The program will access the SB database 111 and provide the desired information to the user, preferably in another screen (not shown).

If necessary, the user can remove an SB from the modification scope by selecting the desired SB in output section 211 and clicking the Remove button in the decision section 209 with the input device 103. Accordingly, the program reverses the steps described above when adding an SB to the modification scope *(i.e.* also removing the related SBs from the modification scope).

Once the user has added all of the desired SBs to the modification scope, the user manipulates the input device 103 to select OK button 215. Before generating the new modification scope, the program performs one final check. The program accesses an engine maintenance history database 113 to ensure whether the selected SBs have already been performed on the engine. The engine maintenance history database 113 preferably includes at least a listing of the SBs already performed on the engine. Should the temporary work scope register include pre-performed SBs, the program notifies the user (not shown) and allows the user to remove such SBs from the modification scope. Alternatively, the program could remove pre-performed SBs from the modification scope automatically.

The program then creates a modification scope database 115 on the server 109 (or modifies a pre-existing modification scope database 115 on the server 109). Now on the server 109, other areas of the maintenance facility can access the modification scope database 115 (along with other documents such as the Engine Manual ("EM')) in order to assemble the various work instructions necessary to perform the overhaul on the engine. This task occurs independent of the present invention.

The program then iterates the modification scope database 115 through an As-Shipped BOM database 117 to create a Planned Configuration database 119. In other words, the program generates a preliminary determination of the parts that the maintenance facility will reassemble on the engine. Generating the Planned Configuration database 119 helps the maintenance facility begin considering the logistics of the maintenance operation.

With the modification scope database 115 and the Planned Configuration database 119 generated, the overhaul process 10 progresses to the sixth step 22. While preparing to peform or while performing the overhaul, the maintenance facility may discover a sourcing problem with one or more of the parts destined for installation in the engine. As discussed above, sourcing problems could include an unfillable order, part unavailability, excessive lead-time, or high part price.

The program could notify the maintenance facility of this sourcing problem after comparing the Planned Configuration database 119 to a database (not shown) of parts affected by sourcing problems. The maintenance facility could also learn of sourcing problems away from the program (e.g. sourcing problems that have occurred after the most recent update of the database). The maintenance facility preferably utilizes an analysis module 300 of the present invention to alleviate the sourcing problem.

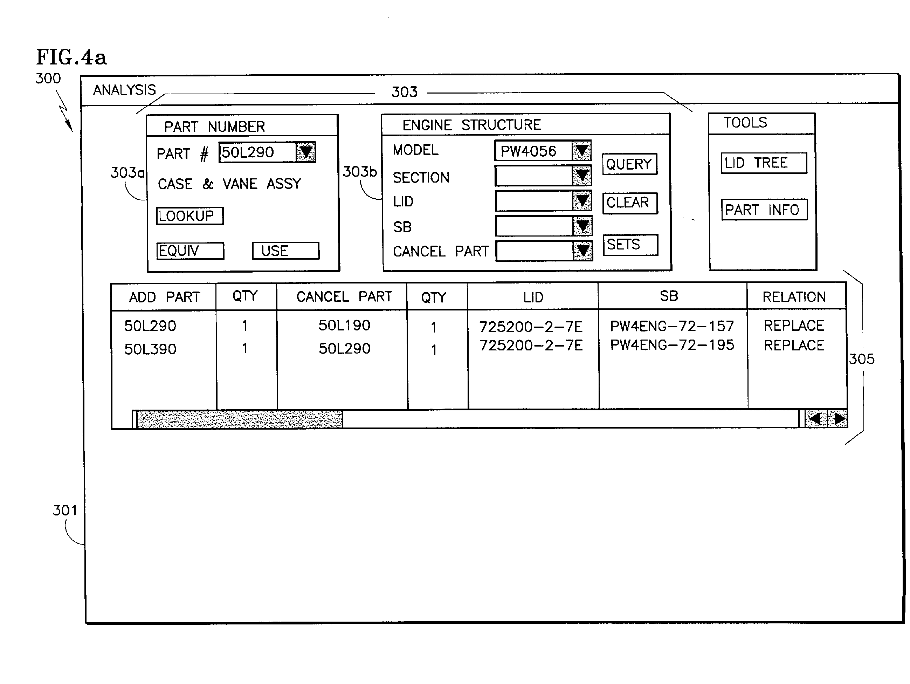

Figure 4a displays a screen 301 generated by the analysis module 300 of the program to assist the maintenance facility after discovering a sourcing problem. The screen 301 could include an input section 303 and a results section 305. Any other suitable arrangement could be used. The various sections will be described in more detail below.

The input section 303 of the screen 301 preferably allows the user to enter part-specific information in box 303a or more generalized information in box 303b. However, the program could use any type of information sufficient to assist the user in modifying the work scope. The user can manually provide the desired information with the input device 103 of the computer 101, or the user could select options appearing in a drop-down box. For example, the program could pre-populate the input section 303 with information from the Planned Configuration database 119 on the server 109.

The program then searches the SB database 111 for instances of the information provided by the user to the input section 303. The program displays the results of such query in the results section 305. If no SB introduced the part *(i.e.* no data appears in the results section 305), then the subject part is considered a basic part A basic part was installed during original assembly of the engine *(i.e.* the part is in the As-Built BOM).

If the desired part number appears in more than one SB *(e.g.* in the Add Parts List of one SB and in the Cancel Parts List in another SB), the user must specify one of the SBs before proceeding.

Before choosing an SB, the user can obtain additional information regarding the SBs while in screen 301. For example, box 303b allows the user to obtain information regarding Sets Requirements, Sets/Stage Requirements or Optional Dependency by clicking the Sets button. The program displays such information by opening another window (not shown).

As stated earlier, a Sets Requirement requires the replacement of every part on the Cancel Parts List of the SB with the parts on the Add Parts List of the SB. In other words, a Set Requirement prohibits intermix of parts from the Add Parts List with parts from the Cancelled Parts List.

A Sets/Stage Requirement differs from a Sets Requirement. A Sets/Stage Requirement may arise when an SB deals with the same part number at multiple locations within the engine. The Sets/Stage Requirement allows partial incorporation of the SB by replacing all of the subject parts at one location within the engine. For example, a Sets/Stage Requirement could allow the maintenance facility to replace all of the compressor blades from the fifth stage, without replacing the sixth stage blades. The maintenance facility would fully incorporate the SB during a subsequent maintenance visit by replacing the sixth stage blades.

Optional Dependency differs from both a Sets Requirement and a Sets/Stage Requirement. An Optional Dependency indicates related parts within the Add Parts List. An assembly (such as a ring segment), which is formed by various subcomponents (such as vane assemblies and pins), typifies related parts within an SB. When an Optional Dependency exists, the program will display the options available for all of the related parts as a group.

The program could use a Location Identifier (LID) to designate a specific location for a part in the engine (since a given part number could reside at multiple locations in the engine). The LID has five fields. The first three fields follow Air Transport Association (ATA) Specification 100 standards. That is, the first three fields of the LID refer to ATA Chapter, Section and Subject. Dashes separate the first three fields from the fourth field and the fourth field from the fifth field. The fourth and fifth fields equate to the IPC Figure and Item Number that display the part.

The screen 301 also includes a tools box 309. In the tools box 309, the user can obtain additional information regarding the selected part. Specifically, the user can obtain information regarding optional parts for the current SB level. Optional part information lists interchangeable parts *(i.e.* direct substitutes), alternate parts *(e.g.* parts, such as clamps, that are usable even if undersized or oversized from the desired sized) and preferred parts *(i.e.* the chobe of one interchangeable part over another interchangeable part) for the current SB level. The program could also provide the user with information regarding sourcing problems such as by querying the sourcing problems database. The program provides this additional information by opening a new window (not shown).

The program obtains this information by querying an IPC database 123 on the server 109. The IPC database 123 preferably includes an electronic version of the hard copy IPC (e.g. in HTML format) for viewing upon request by the user and a version of the IPC in a codification understood by the program when accessed during a query,

Once the user selects the desired SB, the program refreshes the screen 301. In particular, the program populates input section 303b with the relevant SB information. The program also replaces the results section 305 with an output section 307. The program populates the output section 307 with information from a query to the SB database 111. A first section 307a of the output section 307 display parts added by the SB at the specific LID. A second section 307b of the output section 307 displays parts added by the SB at the other LIDs and which have a Sets Requirement.

As described earlier, the maintenance facility has recognized a sourcing problem with a part. For example, the maintenance facility may have determined that part number 50L290 has a long lead time. This long lead time may affect the ability of the maintenance facility to complete the maintenance operation on time. The program allows the user to find a solution to the sourcing problem and to determine whether the solution is acceptable. Specifically, the program allows the user to determine if a suitable alternate part is available and whether the incorporation of the alternate part into the engine is a satisfactory solution.

The user has two options when determining the possibility of alternate parts. The user can search for an "up replacement" for the subject part or a "down replacement" for the subject part An "up replacement" part is a part added by an SB which cancels the subject part To use the "up replacement" part as the alternate part, the user would need to add the SB to the work scope.

A "down replacement" part is a part cancelled by an SB which adds the subject part To use the "down replacement" part as the alternate part, the user would need to modify the work scope to reverse the work steps described in the SB.

The user can determine "up replacement" and "down replacement" parts by selecting the LID tree button in the tools box 309. The LID tree button provides a graphical representation of the "up replacements" and "down replacements" of the subject part. The program provides this information in a pop-up screen 351 generated by the analysis module 300 of the program.

The screen 351 provides engine location information 353 *(i.e.* LID), hierarchy information 355, incorporation information 357 (i.e. either displaying the SB that incorporated the part or an indication that the part is a basic part), and operation information 359 *(i.e.* what the SB performs on the cancelled part) The program obtains this information during multiple iterations of queries to the SB database 111. The program iterates until the down replacement query reaches basic parts and the up replacement query finds no additional data.

Since the specific SB may affect other parts in the engine (*e.g*. due to a Sets Requirement), the user must ensure that the use of such "up replacement" or "down replacement" alternate part does not affect the engine configuration, does not overly complicate the maintenance operation, or significantly increase the price of the maintenance operation. The user determines the impact of using an "up replacement" or a "down replacement" by selecting a possible replacement appearing in the hierarchy with the input device 103 of the computer 101.

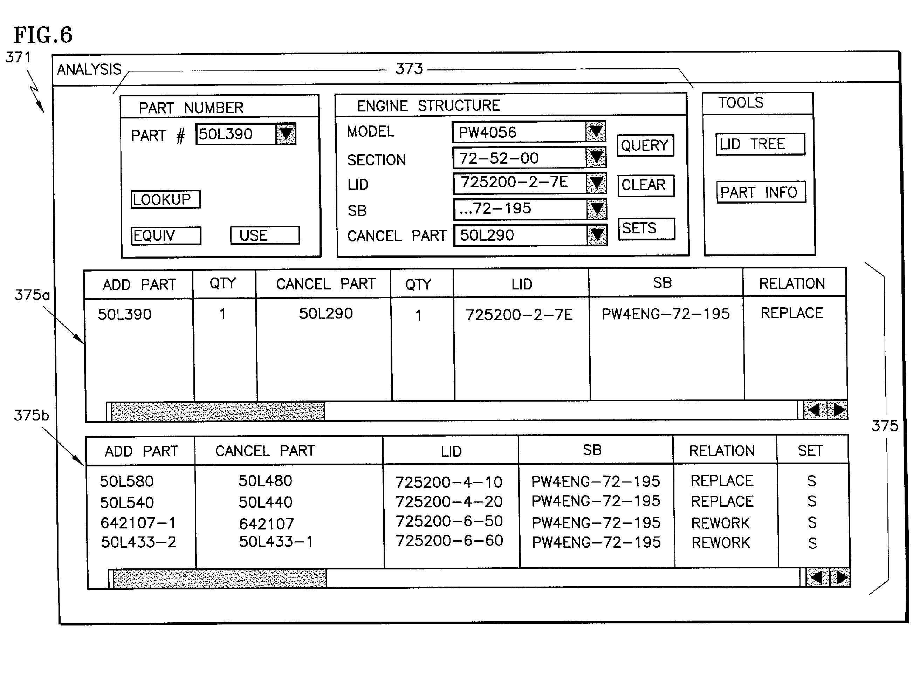

The program will then display information regarding the possible replacement part in another pop-up screen 371. Figure 6 displays the screen 371, Specifically, the user sdected part number 50L390 as the possible replacement part. With this selection, the program launches the screen 371.

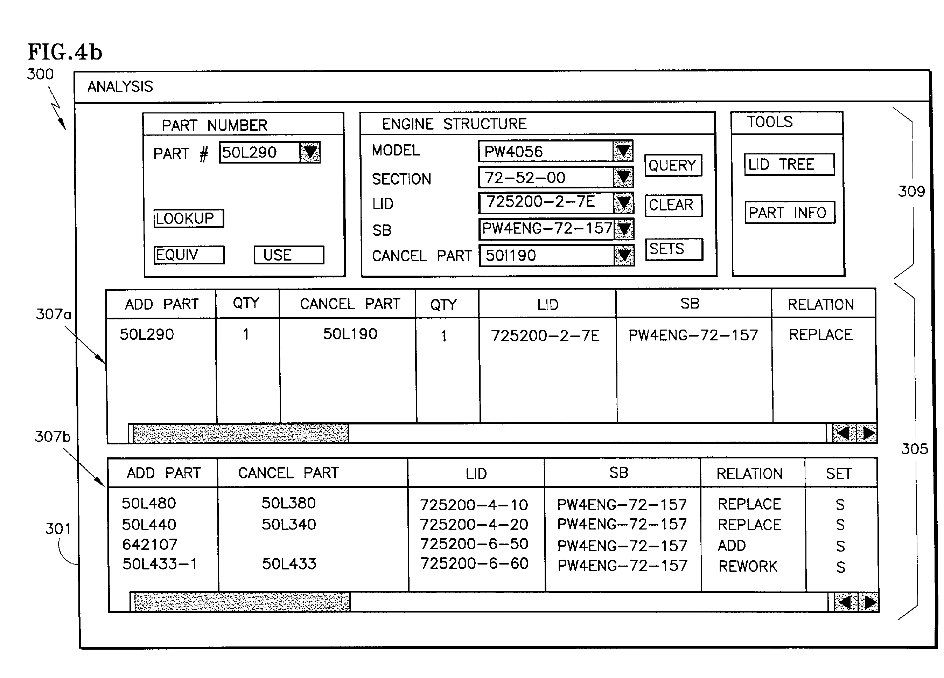

The screen 371 resembles screen 301 in Figure 4b. The screen 371 includes an input section 373 and an output section 375. The program populates the input section 373 with the information on the possible replacement part selected by the user. The program then queries the SB database 111 for information to populate the output section 375. A first section 375a of the output section 375 displays parts added by the SB at the LID of the possible replacement part. A second section 375b of the output section 375 displays parts added by the SB at other LIDs and which have a Sets Requirement. In other words, the screen 371 allows the user to the ease or the difficulty of using the possible replacement part to overcome the sourcing problem.

As seen in Figure 6, using the "up replacement" part 50L390 to avoid the sourcing problem does not appear difficult The user may deem the use of this part an acceptable solution. If the user does not deem the part an acceptable part or the user wishes to continue investigating, then the user can close the screen 373 and return to the screen 351 to select another possible replacement part.

Once the user has determined an appropriate solution to the unavailable part problem, the user would suggest this change to the engine owner. The engine owner would then evaluate whether the benefit of having the maintenance operation completed earlier with up or down replacement parts outweighs the cost of performing the extra SB to incorporate the up or down replacement parts.

Should the engine owner agree with the suggestion to use the up or down replacement part, the user would need to add the incorporation of such SB to the modification scope. The user adds the SB to the work scope using the planning module 200 described earlier.

The present invention has been described in connection with the preferred embodiments shown in the various figures. It is to be understood that other similar embodiments may be used or modifications and additions may be made to the described embodiment for performing the same function of the present invention without deviating therefrom. Therefore, the present invention should not be limited to any single embodiment, but rather construed in breadth and scope in accordance with the recitation of the appended claims.

## Claims

1. A computerized method of defining a work scope, comprising the steps of:
providing a list of tasks;
selecting a desired task from said list;
adding said desired task to said work scope;
determining whether a related task exists; and
adding said related task to said work scope if said related task exists.

2. The method as recited in claim 1, wherein said related task comprises a prerequisite task or a concurrent task, and said related task adding step comprises automatically adding said prerequisite task or said concurrent task to said work scope.

3. The method as recited in claim 1 or 2, wherein said related task comprises a prerequisite task, a concurrent task, a superceding task or a recommended task, and said related task adding step comprises the steps of:
automatically substituting said desired task with said superceding task on said work scope;
automatically adding said prerequisite task or said concurrent task to said work scope; and
adding said recommended task to said work scope if a user seeks performance of said recommended task.

4. The method as recited in claim 1, 2 or 3, wherein said determining step includes accessing a database to locate said related task.

5. The method as recited in any preceding claim, further comprising the step of determining if said desired task or said related task has been previously performed.

6. The method as recited in any preceding claim, wherein said list of tasks comprises Service Bulletins.

7. The method as recited in any preceding claim, wherein the work scope is performed on a gas turbine engine.

8. A computerized method of modifying a work scope, comprising the steps of:
providing a work scope, said work scope comprising a plurality of tasks;
choosing a selected task from said plurality of tasks;
locating an alternate task that is suitable as a substitute for said selected task;
determining whether a conflict exists between said alternate task and a remainder of said plurality of tasks; and
substituting said selected task in said work scope with said alternate task if no conflict exists.

9. The method as recited in claim 8, wherein said selected task includes a work step performed on a part, and said choosing step comprises choosing a selected task that includes a part that has an unacceptable lead-time, is unavailable, or has an unacceptable cost.

10. The method as recited in claim 8 or 9, wherein the work scope is performed on a gas turbine engine.

11. A computerized method of displaying a graphical representation of a relationship between data elements within a database, comprising the steps of:
providing a database of data groups, each of said data groups containing at least one data element;
selecting a desired one of said data elements;
searching said database for instances of said desired data element;
determining a relationship between said data groups which contain said desired data element; and
displaying said relationship.

12. The method as recited in claim 11, wherein each of said data groups contain a plurality of data elements, and further comprising the steps of:
selecting a related data element from said data groups which contains said desired data element, said related data element having a correlation with said desired data element;
searching said database for instances of said related data element;
determining a relationship between said data groups which contain said related data element; and
displaying said relationship.

13. The method as recited in claim 11 or 12, wherein said data elements comprise part numbers.

14. The method as recited in claim 13, wherein said relationship shows a hierarchy of part numbers.

15. The method as recited in any of claims 11 to 14, wherein said data groups comprise Service Bulletins.

16. The method as recited in claim 15, wherein said relationship is a hierarchy of part numbers added or cancelled by said Service Bulletins.
